# DEMANDE DE BREVET EUROPEEN

(11) **EP 2 146 532 A1**
(43) Date de publication de la demande: **20.01.2010**
(21) Numéro de dépôt: 09164222.3
(22) Date de dépôt: 30.06.2009
(51) Int. Cl.: H04W 12/06, H04L 29/06, H04W 16/16, H04W 48/00

(54) **Méthode de gestion d'un réseau de télécommunication et équipements associés**

(30) Priorité: 17.07.2008 FR 0804074
(71) Demandeur: Alcatel Lucent, 75008 Paris (FR)
(72) Inventeur: Leclerc, Brice, 91620, NOZAY (FR); Conte, Alberto, 91620, NOZAY (FR)
(74) Mandataire: Hedarchet, Stéphane

(57) **Abrégé**

L'invention concerne une méthode de gestion d'un réseau de télécommunication comprenant au moins mie station de base dans laquelle la localisation et l'authentification de ladite au moins une station de base sont réalisées par l'utilisation d'au moins un paramètre d'identification d'une ligne fixe du réseau de télécommunication à laquelle la station de base est connectée.

## Description

La présente invention fait partie du domaine des réseaux de télécommunication et plus particulièrement des réseaux de télécommunication cellulaires comprenant une multitude de stations de base. L'évolution de ces réseaux a conduit à une adaptation de la taille des cellules de manière à répondre aux besoins des utilisateurs. Ainsi, dans les zones urbaines, la taille de ces cellules est réduite et l'accès au réseau est fourni par des stations de base pico (pas) ou stations de base femto (FBS) localisées dans les bâtiments (résidentiels ou professionnels) ou les espaces publiques.

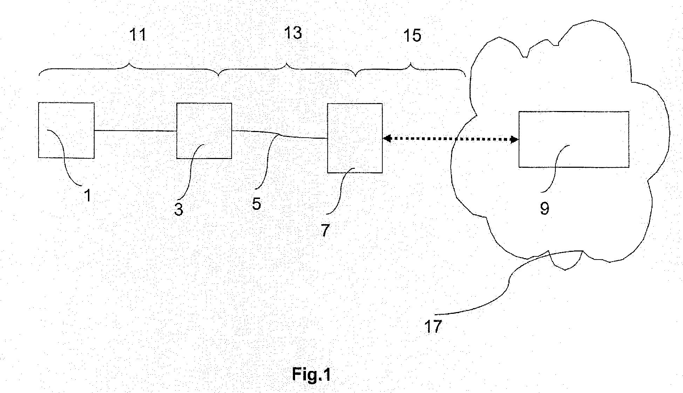

La figure 1 représente un exemple de configuration d'un réseau mobile comprenant des stations de base femto. La station de base femto 1 est connectée à un modem 3 qui est lui-même connecté à une ligne fixe 5. Ladite ligne fixe est reliée à un multiplexeur d'accès à la ligne d'abonné numérique (DSLAM) 7 relié à un serveur de réseau 9.
Un tel réseau peut-être divisé en plusieurs parties.
- le réseau loyal 11 comprenant la station de base femto 1 et le modem 3,
- le réseau d'accès 13 comprenant la ligne fixe 5,
- le réseau d'agrégation 15 comprenait le multiplexeur 7(DSLAM),
- le réseau mobile 17 comprenant un serveur d'authentification, d'autorisation et de comptabilité (accounting) (AAA) 9.

La partie locale du réseau peut être la propriété de l'opérateur qui installe alors lui-même ses stations de base mais peut aussi ne pas appartenir à l'opérateur, dans ce cas, les utilisateurs achètent et installent eux-mêmes leurs stations de base dans leur domicile par exemple. Le problème principal pour l'opérateur avec de tels réseaux est d'authentifier et de localiser les stations de base 1 qui ne lui appartiennent pas et qui sont connectées au réseau afin d'assurer la sécurité du réseau et d'allouer les fréquences appropriées au bon fonction du réseau. En effet, comme la station de base femto 1 est installée localement par les utilisateurs, l'opérateur doit identifier la station de base femto 1 avant de lui accorder le droit d'accès au réseau et de partager avec elle les ressources de fonctionnement.

De plus, l'opérateur doit localiser la station de base femto 1 afin de lui allouer les fréquences appropriées et empêcher ainsi les possibles interférences avec les cellules voisines.
Différentes techniques sont utilisées dans l'état de la technique pour solutionner ces problèmes. Concernant l'allocation de fréquences, les stations de base peuvent être équipées de GPS, ce qui est une solution coûteuse et qui ne marche pas à l'intérieur des bâtiments. Une scrutation des fréquences voisines peut aussi être réalisée mais cela augmente le temps de démarrage de la base station de base.
Concernant l'authentification, des certificats digitaux peuvent être insérés dans la station de base ou un système comportant une carte SIM peut être utilisé, mais ces deux solutions sont coûteuses.

D'autre part, un autre problème concerne la confidentialité des appels. En effet, dans le cas où deux maisons voisines sont équipées chacune d'une station de base, l'utilisateur peut se connecter aussi bien à sa propre station de base qu'à celle de son voisin. Néanmoins, rien ne lui assure que la station de base de son voisin n'est pas piratée et que ses appels ne sont pas écoutés. L'utilisateur doit donc avoir confiance en la station de base qui assure la transmission et le codage de ses télécommunications. Les solutions de l'état de la technique comprennent des systèmes de détection due falsification et des cadenas électroniques afin de protéger les clés numériques et les programmes sensibles de la station de base. Néanmoins, ces solutions sont coûteuses et n'éliminent pas totalement le risque de piratage.

C'est donc un objet de la présente invention de surmonter les inconvénients précités de l'état de la technique et de fournir une méthode permettant l'authentification et la localisation des stations de base ainsi que le renforcement de la confidentialité des télécommunications.

A cet effet l'invention concerne une méthode de gestion d'un réseau de télécommunication comprenant au moins une station de base dans laquelle la localisation et l'authentification de ladite au moins une station de base sont réalisées par l'utilisation d'au moins un paramètre d'identification d'une ligne fixe du réseau de télécommunication à laquelle la station de base est connectée.

Selon un premier mode de réalisation, ladite, au moins une, station de base est une station de base femto.

Selon un mode de réalisation supplémentaire, ladite méthode comprend la mise à jour d'une base de données contenant au moins un paramètre d'identification des lignes fixes du réseau et une information associée de localisation du point de connexion.

Selon un autre mode de réalisation, ladite méthode comprend les étapes d'enregistrement suivantes :
- recevoir une requête d'enregistrement provenant d'une station de base connectée à une ligne fixe du réseau,
- identifier ladite ligne fixe du réseau à laquelle la station de base est connectée,
- déterminer la localisation du point de connexion de la ligne fixe du réseau identifiée,
- déterminer la configuration radio de la station de base à ladite localisation,
- enregistrer, dans une base de données d'accès au réseau, la localisation de la station de base et ledit au moins un paramètre d'identification de la ligne fixe associée.

Selon un autre mode de réalisation, ladite méthode comprend les étapes d'enregistrement suivantes :
- recevoir une requête d'enregistrement concernant une ligne fixe du réseau apte à recevoir la connexion d'une station de base, la requête comprenant au moins un paramètre d'identification de ladite ligne fixe,
- déterminer la localisation du point de connexion de la ligne fixe du réseau identifiée,
- déterminer la configuration radio de la station de base à ladite localisation,
- enregistrer, dans une base de données d'accès au réseau, la localisation de la station de base et ledit au moins un paramètre d'identification de la ligne fixe associée.

Selon un mode de réalisation additionnel, ladite méthode comprend au moment du démarrage ou de la reconfiguration d'une station de base, les étapes d'activation suivantes:
- recevoir une demande de ressources d'une station de base,
- vérifier que ladite demande provienne d'une station de base connectée à une ligne fixe du réseau enregistrée dans ladite base de données d'accès au réseau,
- mettre à disposition de ladite station de base des ressources de fonctionnement en fonction de la localisation de la station de base en cas de vérification positive.

Selon un mode de réalisation supplémentaire, ladite base de données d'accès au réseau comprend une liste d'équipements utilisateur associés à au moins une ligne fixe du réseau.

Selon un autre mode de réalisation, la méthode comprend les étapes suivantes de rattachement d'un équipement utilisateur au réseau:
- recevoir une demande de rattachement au réseau de télécommunication de l'équipement utilisateur,
- vérifier que la demande de rattachement provienne d'une station de base femto connectée à une ligne fixe de réseau enregistrée comme associée audit équipement utilisateur dans ladite base de données d'accès au réseau,
- rattacher ledit équipement utilisateur au réseau de télécommunication en cas de vérification positive.

La présente invention concerne également un serveur de réseau de télécommunication relié à une pluralité de stations de base dans lequel la localisation et l'authentification des stations de base reposent sur au moins un paramètre d'identification d'une ligne fixe du réseau à laquelle une station de base est connectée.

Selon un mode de réalisation supplémentaire, ledit serveur comprend au moins un moyen de traitement capable de réaliser les étapes d'enregistrement suivantes:
- recevoir une requête d'enregistrement provenant d'une station de base connectée à une ligne fixe du réseau,
- identifier ladite ligne fixe du réseau à laquelle la station de base est connectée,
- déterminer la localisation du point de connexion de la ligne fixe du réseau identifiée,
- déterminer la configuration radio de la station de base à ladite localisation,
- enregistrer, dans une base de données d'accès au réseau, la localisation de la station de base et ledit au moins un paramètre d'identification de la ligne fixe associée.

Selon un mode de réalisation supplémentaire, ledit serveur comprend au moins un moyen de traitement capable de réaliser les étapes d'enregistrement suivantes:
- recevoir une requête d'enregistrement concernant une ligne fixe du réseau à laquelle est ou sera connectée une station de base, la requête comprenant au moins un paramètre d'identification de ladite ligne fixe,
- déterminer la localisation du point de connexion de la ligne fixe du réseau identifiée,
- déterminer la configuration radio de la station de base à ladite localisation,
- enregistrer, dans une base de données d'accès au réseau, la localisation de la station de base et ledit au moins un paramètre d'identification de la ligne fixe associée,

Selon un autre mode de réalisation, ledit serveur comprend au moins un moyen de traitement capable de réaliser les étapes d'activation suivantes:
- recevoir une demande de ressources d'une station de base,
- vérifier que ladite demande provienne d'une station de base connectée à une ligne fixe du réseau enregistrée dans ladite base de données d'accès au réseau,
- mettre à disposition de ladite station de base des ressources de fonctionnement en fonction de la localisation de la station de base en cas de vérification positive.

Selon un mode de réalisation supplémentaire, le dit serveur comprend au moins un moyen de traitement capable de réaliser les étapes de rattachement suivantes:
- recevoir une demande de rattachement au réseau de télécommunication de l'équipement utilisateur,
- vérifier que la demande de rattachement provienne d'une station de base femto connectée à une ligne fixe de réseau enregistrée comme associée audit équipement utilisateur dans ladite base de données d'accès au réseau,
- rattacher ledit équipement utilisateur au réseau de télécommunication en cas de vérification positive.

D'autres caractéristiques et avantages de l'invention apparaîtront de la description qui va maintenant en être faite, en référence aux dessins annexés qui en représentent, à titre indicatif mais non limitatif, un mode de réalisation possible.

Sur ces dessins:
- la figure 1 est un schéma représentant un exemple de configuration d'un réseau de télécommunication comprenant des stations de base femto 1;
- la figure 2 est un tableau représentant un exemple de réalisation de base de données de lignes fixes 5;
- la figure 3 représente un schéma synoptique des différentes étapes d'enregistrement selon la présente invention;
- la figure 4 est un tableau représentant un exemple de réalisation de base de données d'accès au réseau;
- la figure 5 représente un schéma synoptique des différentes étapes d'activation selon la présente invention;
- la figure 6 représente un schéma synoptique des différentes étapes de rattachement selon la présente invention;

Le terme « SIM » réfère à l'acronyme module d'identification d'abonné;

Le terme « GPS » réfère à l'acronyme système de géolocalisation par satellite;

Le terme « ligne fixe » réfère à tous types de câbles de transmission de signaux (câbles en cuivre, fibres optiques,...)

Le terme « équipement utilisateur » réfère à un terminal de télécommunication (téléphone, PDA, ordinateur portable) manipulé par l'utilisateur pour communiquer à travers le réseau par le biais de stations de base.

Le terme « point de connexion » réfère à l'extrémité de la ligne fixe au niveau de laquelle les stations de base sont connectées.

Le terme « configuration radio » de la station de base réfère aux différents paramètres dépendant de la localisation et concernant les émissions radio comme par exemple les fréquences d'émission autorisées, les puissances d'émission autorisées ou les codes de brouillage UMTS/LTE. Ces paramètres dépendent généralement de la technologie radio utilisée.

Les différents éléments du dispositif selon l'invention vont maintenant être décrits plus en détail en référence aux figures. Sur ces figures, les éléments identiques portent les mêmes numéros de référence.

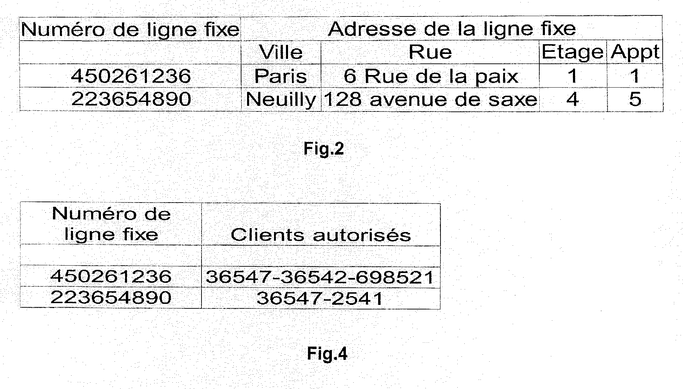

L'idée principale de la présente invention est d'authentifier et localiser les stations de base femto (FBS) 1 d'un réseau de télécommunication grâce à l'identification de la ligne fixe 5 à laquelle elles sont reliées.
La présente invention requiert l'utilisation d'une base de données référençant toutes les lignes fixes avec leurs paramètres d'identification. Ces paramètres peuvent être les numéros de ligne fixe 5 et l'adresse correspondant au point de connexion de ces lignes fixes 5. La figure 2 représente un exemple de réalisation d'une telle base de données. La première colonne correspond au numéro des lignes fixes 5 qui peut être un numéro de référence ou le numéro de téléphone correspondant à la ligne. La deuxième colonne est l'adresse de la ligne fixe 5 comprenant l'étage et le numéro d'appartement voir un numéro de pièce. En effet, plusieurs FBS 1 peuvent se trouver au sein d'un même bâtiment voir même d'un seul appartement. D'éventuelles informations additionnelles peuvent être ajoutées à la base de données si nécessaires ou requises par l'opérateur réseau. La base de données est entretenue et mise à jour par les employés de l'opérateur réseau garantissant ainsi l'exactitude des données.

La présente invention peut être divisée en trois étapes principales:
- une étape d'enregistrement réalisée au moins lors de la première activation de la FBS 1 et à chaque fois que ladite FBS 1 est connectée à une nouvelle ligne fixe 5,
- une étape d'activation au démarrage ou lors d'une reconfiguration de la FBS 1,
- une étape de rattachement de l'équipement utilisateur,

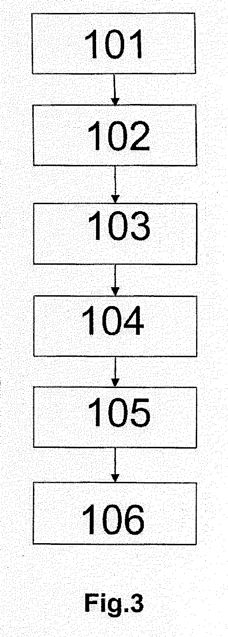

Les différentes étapes d'enregistrement sont présentées sur la figure 3.
La première étape 101 concerne l'installation et le branchement de la FBS 1 par l'utilisateur. Une requête d'enregistrement est alors envoyée au serveur 9 (étape 102). Le serveur 9 repère et identifie la ligne fixe 5 à laquelle est connectée la FBS 1 ayant envoyée la requête (étape 103). Grâce à la base de données décrite sur la figure 2, le serveur 9 peut alors localiser le point de connexion de la dite FBS 1 demandant une activation (étape 104). A partir de cette localisation et d'un planning des fréquences utilisées dans la région du point de connexion, le serveur 9 peut déterminer les paramètres d'émission (fréquence et puissance d'émission, code de brouillage...) autorisés à cet emplacement (étape 105). La ligne fixe 5 correspondante est alors enregistrée dans une base de données des liens d'accès autorisés (étape 106), telle que représentée sur la figure 4.
Pour que les lignes fixes 5 soient enregistrées dans la base de données des liens d'accès autorisés, l'utilisateur doit préalablement envoyer une notification à l'opérateur réseau afin de l'informer des lignes fixes 5 dans lesquelles sont connectées les FBS 1 en qui il a confiance. Un utilisateur peut bien sûr être enregistré comme faisant confiance aux FBS 1 connectées sur différenties lignes fixes 5.

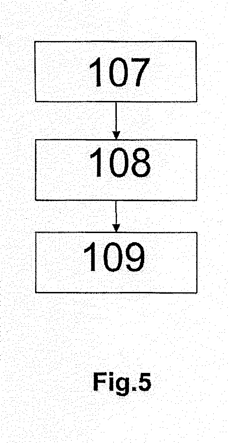

Les étapes d'activation sont présentées sur la figure 5.

Au démarrage ou au moment de sa reconfiguration, la FBS 1 envoie une demande au serveur 9 pour obtenir des ressources de fonctionnement en fonction de sa localisation (étape 107). Le serveur 9 vérifie alors que la ligne fixe à laquelle la FBS 1 est connectée est enregistrée dans la base de données d'accès au réseau (étape 108). Si c'est le cas, les ressources de fonctionnement fonction de la localisation de la FBS sont mises à disposition de la FBS 1 (étape 109).

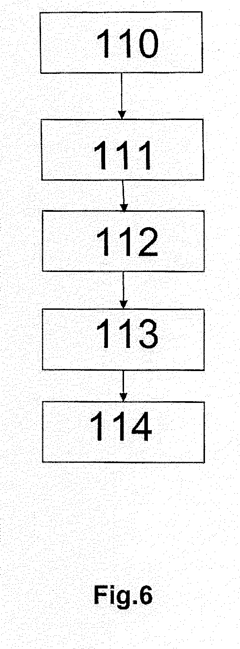

Les étapes de rattachement d'un équipement utilisateur au réseau sont présentées sur la figure 6.

Lorsqu'un équipement utilisateur détecte une FBS 1 (étape 110), il tente de se rattacher au réseau par le biais de cette FBS 1 en envoyant une demande de rattachement à ladite FBS 1 (étape 111). Ladite demande est alors transmise au serveur 9 (étape 112). Le serveur 9 identifie alors, d'une part l'équipement utilisateur voulant se rattacher au réseau et d'autre part la ligne fixe 5 à laquelle la FBS 1 d'où provient la demande de rattachement est connectée (étape 113). Si l'utilisateur a été enregistrée comme faisant confiance aux FBS 1 connectées sur cette ligne fixe 5, ledit équipement utilisateur est alors rattaché au réseau et peut communiquer librement (étape 114).

En pratique, lors de son inscription auprès de l'opérateur réseau, l'utilisateur définit les lignes fixes 5 auxquelles seront connectées les FBS 1 dans lesquelles il a confiance. Ces données sont enregistrées dans les bases de données du réseau. Ainsi, lorsque l'utilisateur se déplace et rentre dans une zone couverte par une FBS 1 du réseau (handover), son équipement va automatiquement faire une demande de rattachement. Néanmoins, si la FBS 1 à laquelle il essaie de se rattacher n'est pas connectée à une ligne fixe enregistrée dans la liste de confiance qu'il a définit précédemment, le rattachement au réseau sera refusé (ou un message d'alerte lui sera envoyé pour lui indiqué le risque de non-confidentialité de ses appels). Cela permet donc à l'utilisateur d'obtenir le niveau de confidentialité voulu en définissant lui-même les stations de base dans lesquelles il a confiance. En reprenant l'exemple des deux maisons voisines, l'utilisateur pourra soit se connecter uniquement à sa propre station de base, soit sera avertit qu'il est connecté à la station de base de son voisin et qu'un risque de piratage de ses communications existe. De plus, comme la présente invention repose sur l'identification de la ligne fixe 5 à laquelle la FBS 1 est connectée, la FBS 1 peut être standard et ainsi n'entraîne pas de coût supplémentaire afin d'assurer la confidentialité des appels.

La présente invention permet donc, grâce à l'identification des lignes fixes 5 et à l'utilisation d'une base de données comprenant la localisation des points de connexion de ces lignes fixes 5, d'assurer, d'une part, une localisation fiable des FBS 1 et ainsi permettre une détermination de la configuration radio desdites FBS 1 et en particulier des fréquences disponibles. Cela permet de respecter les licences de fréquences et prévenir les éventuelles interférences pouvant avoir lieu avec les cellules voisines. D'autre part, cela permet à l'utilisateur d'obtenir une plus grande confidentialité en choisissant lui-même ses points d'accès au réseau.

## Revendications

1. Méthode de gestion d'un réseau de télécommunication comprenant au moins une station de base dans laquelle la localisation et l'authentification de ladite au moins une station de base sont réalisées par l'utilisation d'au moins un paramètre d'identification d'une ligne fixe du réseau de télécommunication à laquelle la station de base est connectée.

2. Méthode de gestion d'un réseau de télécommunication selon la revendication 1 dans laquelle ladite, au moins une, station de base est une station de base femto (1).

3. Méthode de gestion d'un réseau de télécommunication selon la revendication 1 ou 2 comprenant la mise à jour d'une base de données contenant au moins un paramètre d'identification des lignes fixes (5) du réseau et une information associée de localisation du point de connexion.

4. Méthode de gestion d'un réseau de télécommunication selon la revendication 3 comprenant les étapes d'enregistrement suivants :
- recevoir une requête d'enregistrement provenant d'une station de base connectée à une ligne fixe (5) du réseau,
- identifier ladite ligne fixe (5) du réseau à laquelle la station de base est connectée,
- déterminer la localisation du point de connexion de la ligne fixe (5) du réseau identifiée,
- déterminer la configuration radio de la station de base à ladite localisation,
- enregistrer, dans une base de données d'accès au réseau, la localisation de la station de base et ledit au moins un paramètre d'identification de la ligne fixe (5) associée.

5. Méthode de gestion d'un réseau de télécommunication selon la revendication 3 comprenant les étapes d'enregistrement suivantes :
- recevoir une requête d'enregistrement concernant une ligne fixe du réseau apte à recevoir la connexion d'une station de base, la requête comprenant au moins un paramètre d'identification de ladite ligne fixe,
- déterminer la localisation du point de connexion de la ligne fixe du réseau identifiée,
- déterminer la configuration radio de la station de base à ladite localisation,
- enregistreur, dans une base de données d'accès au réseau, la localisation de la station de base et ledit au moins un paramètre d'identification de la ligne fixe associée.

6. Méthode de gestion d'un réseau de télécommunication selon la revendication 4, comprenant, au moment du démarrage ou de la reconfiguration d'une station de base, les étapes d'activation suivantes:
- recevoir une demande de ressources d'une station de base,
- vérifier que ladite demande provienne d'une station de base connectée à une ligne fixe (5) du réseau enregistrée dans ladite base de données d'accès au réseau,
- mettre à disposition de ladite station de base des ressources de fonctionnement en fonction de la localisation de la station de base en cas de vérification positive.

7. Méthode de gestion d'un réseau de télécommunication selon l'une des revendications précédentes dans laquelle ladite base de données d'accès au réseau comprend une liste d'équipements utilisateur associés à au moins une ligne fixe (5) du réseau.

8. Méthode de gestion d'un réseau de télécommunication selon les revendications 2 et 7 comprenant les étapes suivantes de rattachement d'un équipement utilisateur au réseau:
- recevoir une demande de rattachement au réseau de télécommunication de l'équipement utilisateur,
- vérifier que la demande de rattachement provienne d'une station de base femto (1) connectée à une ligne fixe (5) de réseau enregistrée comme associée audit équipement utilisateur dans ladite base de données d'accès au réseau,
- rattacher ledit équipement utilisateur au réseau de télécommunication en cas de vérification positive.

9. Serveur de réseau (9) de télécommunication relié à une pluralité de stations de base dans lequel la localisation et l'authentification des stations de base reposent sur au moins un paramètre d'identification d'une ligne fixe (5) du réseau à laquelle une station de base est connectée.

10. Serveur de réseau (9) de télécommunication selon la revendication 9 comprenant au moins un moyen de traitement capable de réaliser les étapes d'enregistrement suivantes:
- recevoir une requête d'enregistrement provenant d'une station de base connectée à une ligne fixe (5) du réseau,
- identifier ladite ligne fixe (5) du réseau à laquelle la station de base est connectée,
- déterminer la localisation du point de connexion de la ligne fixe (5) du réseau identifiée,
- déterminer la configuration radio de la station de base à ladite localisation,
- enregistrer, dans une base de données d'accès au réseau, la localisation de la station de base et ledit au moins un paramètre d'identification de la ligne fixe (5) associée.

11. Serveur de réseau (9) de télécommunication selon la revendication 9 comprenant au moins un moyen de traitement capable de réaliser les étapes d'enregistrement suivantes:
- recevoir une requête d'enregistrement concernant une ligne fixe du réseau à laquelle est ou sera connectée une station de base, la requête comprenant au moins un paramètres d'identification de ladite ligne fixe,
- déterminer la localisation du point de connexion de la ligne fixe du réseau identifiée,
- déterminer la configuration radio de la station de base à ladite localisation,
- enregistrer, dans une base de données d'accès au réseau, la localisation de la station de base et ledit au moins un paramètre d'identification de la ligne fixe associée.

12. Serveur de réseau (9) de télécommunication selon la revendication 10 comprenant au moins un moyen de traitement capable de réaliser les étapes d'activation suivantes:
- recevoir une demande de ressources d'une station de base,
- vérifier que ladite demande provienne d'une station de base connectée à une ligne fixe (5) du réseau enregistrée dans ladite base de données d'accès au réseau,
- mettre à disposition de ladite station de base des ressources de fonctionnement en fonction de la localisation de la station de base en cas de vérification positive.

13. Serveur de réseau (9) de télécommunication selon la revendication 11 comprenant au moins un moyen de traitement capable de réaliser les étapes de rattachement suivantes:
- recevoir une demande de rattachement au réseau de télécommunication de l'équipement utilisateur,
- vérifier que la demande de rattachement provienne d'une station de base femto (1) connectée à une ligne fixe (5) de réseau enregistrée comme associée audit équipement utilisateur dans ladite base de données d'accès au réseau,
- rattacher ledit équipement utilisateur au réseau de télécommunication en cas de vérification positive.
